# EUROPEAN PATENT APPLICATION

(11) **EP 2 472 357 A2**
(43) Date of publication of application: **04.07.2012**
(21) Application number: 11006660.2
(22) Date of filing: 12.08.2011
(51) Int. Cl.: G06F 3/01, G06F 3/048

(54) **Mobile terminal and hologram controlling method thereof**

(30) Priority: 31.12.2010 KR 20100140694
(71) Applicant: LG Electronics Inc., Youngdungpo-ku Seoul 150-721 (KR)
(72) Inventor: Kim, Sangwon, Bundang-Gu Seongnam Gyeonggi-Do (KR); Jung, Woo, Gyeonggi-Do (KR); Kim, Changoh, Jeollanam-Do (KR); Ryu, Hosun, Namdong-Gu Incheon (KR)
(74) Representative: Frenkel, Matthias Alexander

(57) **Abstract**

Disclosed are a mobile terminal and a hologram controlling method thereof. Texts, moving images, contents, and so forth may be displayed as a hologram image, and the displayed hologram image may be variously controlled according to a user's touch. This may solve spatial limitations of a general mobile terminal, and may implement a holographic video call more effectively.

## Description

### BACKGROUND OF THE INVENTION

### 1. Field of the Invention

This specification relates to a mobile terminal, and more particularly, to a mobile terminal capable of efficiently controlling a hologram image at the time of a video call, and a hologram controlling method thereof.

### 2. Background of the Invention

In general, a mobile terminal is configured to perform various functions. These various functions include video and voice call communications, still or moving images capturing using a camera, voice storing, music file reproducing through a speaker system, image or video displaying, etc. Some mobile terminals include additional functions such as playing games, and other mobile terminals are implemented as multimedia players. Moreover, recent mobile terminals are configured to allow a user to view video or television programs by receiving broadcasting or multicast signals.

Various attempts have been made to implement enhanced functions of the mobile terminal not only by structural improvements, but also by hardware or software improvements.

A touch function of the mobile terminal allows even a user having a difficulty in inputting buttons or keys to conveniently operate the mobile terminal, by using a touch screen. Recently, this touch function is considered as an important function of the mobile terminal, together with a User Interface (UI) as well as simple input. Accordingly, developing a suitable UI is required more.

A hologram is a three-dimensional photographic image created with using a principle of holography. According to this principle, light emitted from laser is divided into two. One is used to directly illuminate a screen, and another is used to illuminate an object to be viewed. Here, light used to directly illuminate a screen is called 'reference beam', and light used to illuminate an object to be viewed is called 'object beam'. The object beam is reflected from a surface of an object. Accordingly, a phase difference (a distance from an object surface to a screen) is different according to an object surface.

The reference beam which has not been transformed interferes with the object beam, and an interference pattern is stored into a screen. Here, a film having the interference pattern stored therein is called a 'hologram'. In order to reproduce the stored hologram, the reference beam used when recording has to be re-projected on the screen. Among light projected when reproducing, only light having the same oscillation frequency as that when recording is represented in three dimensions. Here, light having a different wavelength and a different phase is not represented in three dimensions.

Although concerns for the hologram are being increased, methods for controlling and utilizing the hologram have not been concretely disclosed. Especially, there have been performed no researches about all scenarios which may occur when the hologram is applied to a small electronic device such as a mobile terminal.

### SUMMARY OF THE INVENTION

Therefore, an aspect of the detailed description is to provide a mobile terminal capable of effectively controlling each scenario which may occur when a hologram is applied thereto, and a hologram controlling method thereof.

Another aspect of the detailed description is to provide a mobile terminal capable of effectively moving and controlling a hologram image at the time of a video call, and a hologram controlling method thereof.

To achieve these and other advantages and in accordance with the purpose of this specification, as embodied and broadly described herein, a hologram controlling method of a mobile terminal includes displaying a hologram image, detecting an input with respect to the hologram image, and controlling the displayed hologram image based on the detected input.

The hologram image may include a two-dimensional hologram, a three-dimensional hologram and a cubic-type hologram.

The two-dimensional hologram may include an image converted from a prestored plane type image, a still image or a voice, and the three-dimensional hologram may include an image converted from a moving image.

The hologram image may be configured to have a background color automatically changed according to peripheral circumstances, and to have an emitting angle automatically changed according to shake so as to maintain a horizontal state.

An input of the hologram image may include an input through a management screen or a direct input, and the input may include a touch operation.

The hologram image may be displayed through one or more hologram output units, and may be moved between the hologram output units and between the hologram output unit and the management screen.

The hologram image may be moved, exchanged and copied between the hologram output units through a user's touches or communications and approaches between devices, and a viewing angle of the hologram image may be controlled through a personal protection setting.

A display size of the hologram image may be automatically controlled according to a user's distance, and an entire part or a specific part of the hologram image may be moved, enlarged and contracted.

The hologram image may include a hologram preview function displayed when capturing an image, or a hologram distance viewer of an area selected by a user on a map.

To achieve these and other advantages and in accordance with the purpose of this specification, as embodied and broadly described herein, a mobile terminal includes a hologram output unit configured to display a hologram image, a display unit configured to display contents selected by a user, and a controller configured to control the displayed hologram image based on an input with respect to the hologram image.

The hologram image may include a two-dimensional hologram, a three-dimensional hologram, and a cubic-type hologram. Especially, the hologram image may include a hologram preview function displayed when capturing an image, or a hologram distance viewer of an area selected by a user on a map.

The two-dimensional hologram may include an image converted from a prestored plane type image, a still image or a voice, and the three-dimensional hologram may include images converted from moving images.

The hologram output unit may be implemented as one or more hologram cameras, and may be installed at the same position or different positions.

The controller may automatically change the hologram image according to peripheral circumstances, and may automatically change an emitting angle according to shake so as to maintain a horizontal state of the hologram image.

Once a user selects specific contents on the display unit, the controller may check whether the selected contents support a hologram. If the selected contents support a hologram, the controller may display a hologram image through the hologram output unit. On the contrary, if the selected contents do not support a hologram, the controller may display the contents on the display unit.

An input of the hologram image may include an input through a management screen or a direct input, and the input may include a touch operation.

When the hologram output unit is implemented in plurality in number, the controller may control movements of a hologram image between the hologram output units and between the hologram output unit and the management screen.

The controller may control movements, exchanges and copying of a hologram image between the hologram output units through a user's touches or communications and approaches between devices, and may control a viewing angle of a hologram image through a personal protection setting.

The controller may automatically control a display size of a hologram image according to a user's distance, and may control movement, enlargement and contraction of an entire part or a specific part of the hologram image according to a user's touch input.

Further scope of applicability of the present application will become more apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from the detailed description.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a block diagram of a mobile terminal according to the present invention;
FIG. 2 is a block diagram of a wireless communications system where a mobile terminal of the present invention is operable;
FIG. 3 is a view showing an example of a method for controlling (manipulating) a hologram image with using a mobile terminal according to the present invention;
FIG. 4 is a view showing a display type of a hologram image according to the present invention;
FIG. 5 is a view showing an example of a hologram image displayed through a management screen according to the present invention;
FIG. 6 is a view showing an example of images on a hologram menu according to the present invention;
FIGS. 7A to 7C are views each showing an example of contents which can be displayed in the form of a hologram image according to the present invention;
FIG. 8 is a view showing an example of a method for controlling a size of a hologram image according to the present invention;
FIGS. 9A and 9B are views each showing an example of a type of a hologram camera according to the present invention;
FIG. 10 is a view showing an example to maintain a horizontal state of a hologram image according to the present invention;
FIGS. 11A and 11B are views each showing an example of a hologram image implemented according to a user's operation;
FIG. 12 is a view showing a display type of hologram displayable contents according to the present invention;
FIG. 13 is a flowchart showing an example to display hologram contents on a web site according to the present invention;
FIGS. 14A and 14B are views each showing an example to share data at the time of a holographic call according to the present invention;
FIGS. 15A and 15B are views each showing an example of a control function using a hologram according to the present invention;
FIG. 16 is a view showing an example of a function of a hologram camera according to the present invention;
FIG. 17 is a flowchart showing processes for providing a hologram preview function when capturing an image with using a hologram camera according to the present invention;
FIGS. 18A to 18C are views showing various examples to control a part of a hologram image according to the present invention;
FIGS. 19A and 19B are views showing examples to move a hologram image in a copying manner according to the present invention;
FIG. 20 is a view showing an example of a hologram restricting function for protection of personal information according to the present invention;
FIG. 21 is a view showing an example to generate an enlarged hologram image by combining hologram images between devices with each other according to the present invention;
FIGS. 22A is a view showing an example of a hologram distorting function according to the present invention;
FIG. 23 is a view showing an example to display a hologram image through an external input device according to the present invention;
FIG. 24 is a view showing an example to provide a hologram distance viewer according to the present invention; and
FIG. 25 is a flowchart showing a method for controlling a hologram of a mobile terminal according to the present invention.

### DETAILED DESCRIPTION OF THE INVENTION

Description will now be given in detail of the exemplary embodiments, with reference to the accompanying drawings. For the sake of brief description with reference to the drawings, the same or equivalent components will be provided with the same reference numbers, and description thereof will not be repeated.

Hereinafter, a mobile terminal according to the present invention will be explained in more detail with reference to the attached drawings. The suffixes attached to components of the wireless speaker, such as 'module' and 'unit or portion' were used for facilitation of the detailed description of the present invention. Therefore, the suffixes do not have different meanings from each other.

A terminal may be implemented in various types. For instance, the terminal in the present description includes a mobile terminal such as a portable phone, a smart phone, a notebook computer, a digital broadcasting terminal, Personal Digital Assistants (PDA), Portable Multimedia Player (PMP), a navigation system, and a fixed terminal such as a digital TV, a desktop computer, etc. It is assumed that the terminal of the present invention is a mobile terminal. However, it will be obvious to those skilled in the art that the present invention may be also applicable to the fixed terminal, except for specific configurations for mobility.

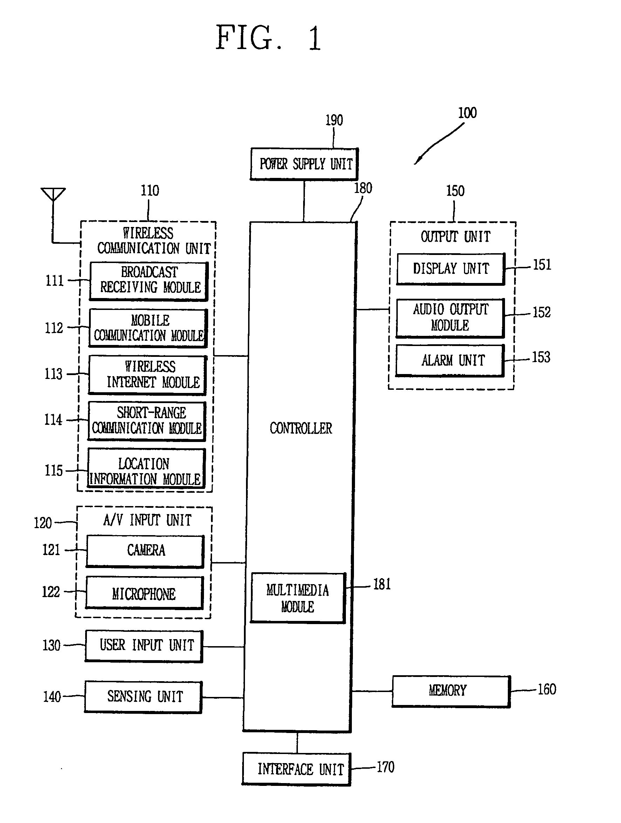

FIG. 1 is a block diagram of a mobile terminal 100 according to an embodiment of the present invention. As shown, the mobile terminal 100 includes a wireless communication unit 110 having one or more components which permits wireless communication between the mobile terminal 100 and a wireless communication system or network within which the mobile terminal is located.

For example, the wireless communication unit 110 includes a broadcast receiving module 111 that receives a broadcast signal and/or broadcast associated information from an external broadcast managing entity via a broadcast channel. The broadcast channel may include a satellite channel and a terrestrial channel.

In addition, the broadcast managing entity generally refers to a system which transmits a broadcast signal and/or broadcast associated information. Examples of broadcast associated information include information associated with a broadcast channel, a broadcast program, a broadcast service provider, etc. For instance, broadcast associated information may include an electronic program guide (EPG) of digital multimedia broadcasting (DMB) and electronic service guide (ESG) of digital video broadcast-handheld (DVB-H).

In addition, the broadcast signal may be implemented as a TV broadcast signal, a radio broadcast signal, and a data broadcast signal, among others. The broadcast signal may further include a broadcast signal combined with a TV or radio broadcast signal.

The broadcast receiving module 111 is also configured to receive broadcast signals transmitted from various types of broadcast systems. For example, such broadcasting systems include the digital multimedia broadcasting-terrestrial (DMB-T) system, the digital multimedia broadcasting-satellite (DMB-S) system, the digital video broadcast-handheld (DVB-H) system, the data broadcasting system known as media forward link only (MediaFLO®) and the integrated services digital broadcast-terrestrial (ISDB-T) system among others. Receiving multicast signals is also possible. Further, data received by the broadcast receiving module 111 may be stored in a suitable device, such as a memory 160.

The wireless communication unit 110 also includes a mobile communication module 112 that transmits/receives wireless signals to/from one or more network entities (e.g., base station, Node-B). Such signals may represent audio, video, multimedia, control signaling, and data, among others.

Also included is a wireless Internet module 113 that supports Internet access for the mobile terminal. The module 113 may be internally or externally coupled to the terminal. The wireless communication unit 110 also includes a short-range communication module 114 that facilitates relatively short-range communications. Suitable technologies for implementing this module include radio frequency identification (RFID), infrared data association (IrDA), ultra-wideband (UWB), as well at the networking technologies commonly referred to as Bluetooth and ZigBee, to name a few.

A position-location module 115 is also included in the wireless communication unit 110 and identifies or otherwise obtains the location of the mobile terminal 100. The position-location module 115 may be implemented using global positioning system (GPS) components which cooperate with associated satellites, network components, and combinations thereof.

In addition, as shown in FIG. 1, the mobile terminal 100 also includes an Audio/video (A/V) input unit 120 that provides audio or video signals to the mobile terminal 100. As shown, the A/V input unit 120 includes a camera 121 and a microphone 122. The camera 121 receives and processes image frames of still pictures or video.

Further, the microphone 122 receives an external audio signal while the portable device is in a particular mode, such as a phone call mode, recording mode and voice recognition mode. The received audio signal is then processed and converted into digital data. Also, the portable device, and in particular, the A/V input unit 120, includes assorted noise removing algorithms to remove noise generated in the course of receiving the external audio signal. In addition, data created by the A/V input unit 120 may be stored in the memory 160, utilized by an output unit 150, or transmitted via one or more modules of the communication unit 110. If desired, two or more microphones and/or cameras may be used.

The mobile terminal 100 also includes a user input unit 130 that generates input data responsive to user manipulation of an associated input device or devices. Examples of such devices include a keypad, a dome switch, a touchpad (e.g., static pressure/capacitance), a jog wheel and a jog switch. A specific example is one in which the user input unit 130 is configured as a touchpad in cooperation with a touch screen display, which will be described in more detail below.

A sensing unit 140 is also included in the mobile terminal 100 and provides status measurements of various aspects of the mobile terminal 100. For instance, the sensing unit 140 may detect an open/close status of the mobile terminal 100, relative positioning of components (e.g., a display and keypad) of the mobile terminal 100, a change of position of the mobile terminal 100 or a component of the mobile terminal 100, a presence or absence of user contact with the mobile terminal 100, orientation or acceleration/deceleration of the mobile terminal 100, etc.

As an example, when the mobile terminal 100 is a slide-type mobile terminal, the sensing unit 140 may sense whether a sliding portion of the mobile terminal 100 is open or closed. Other examples include the sensing unit 140 sensing the presence or absence of power provided by a power supply 190, the presence or absence of a coupling or other connection between an interface unit 170 and an external device, etc.

Further, the interface unit 170 is often implemented to couple the mobile terminal 100 with external devices. Typical external devices include wired/wireless headphones, external chargers, power supplies, storage devices configured to store data (e.g., audio, video, pictures, etc.), earphones, and microphones, among others. In addition, the interface unit 170 may be configured using a wired/wireless data port, a card socket (e.g., for coupling to a memory card, a subscriber identity module (SIM) card, a user identity module (UIM) card, a removable user identity module (RUIM) card, etc.), audio input/output ports and video input/output ports.

The output unit 150 generally includes various components which support the output requirements of the mobile terminal 100. The mobile terminal 100 also includes a display 151 that visually displays information associated with the mobile terminal 100. For instance, if the mobile terminal 100 is operating in a phone call mode, the display 151 will generally provide a user interface or graphical user interface which includes information associated with placing, conducting, and terminating a phone call. As another example, if the mobile terminal 100 is in a video call mode or a photographing mode, the display 151 may additionally or alternatively display images which are associated with these modes.

Further, the display 151 also preferably includes a touch screen working in cooperation with an input device, such as a touchpad. This configuration permits the display 151 to function both as an output device and an input device. In addition, the display 151 may be implemented using display technologies including, for example, a liquid crystal display (LCD), a thin film transistor-liquid crystal display (TFT-LCD), an organic light-emitting diode display (OLED), a flexible display and a three-dimensional display.

The mobile terminal 100 may also include one or more of such displays. An example of a two-display embodiment is one in which one display is configured as an internal display (viewable when the terminal is in an opened position) and a second display configured as an external display (viewable in both the open and closed positions).

FIG. 1 further shows the output unit 150 having an audio output module 152 which supports the audio output requirements of the mobile terminal 100. The audio output module 152 may be implemented using one or more speakers, buzzers, other audio producing devices, and combinations thereof. Further, the audio output module 152 functions in various modes including a call-receiving mode, a call-placing mode, a recording mode, a voice recognition mode and a broadcast reception mode. During operation, the audio output module 152 outputs audio relating to a particular function (e.g., call received, message received, and errors).

In addition, the output unit 150 is further shown having an alarm 153, which is used to signal or otherwise identify the occurrence of a particular event associated with the mobile terminal 100. Alarm events include a call received, a message received and user input received. An example of such output includes the providing of tactile sensations (e.g., vibration) to a user. For instance, the alarm 153 may be configured to vibrate responsive to the mobile terminal 100 receiving a call or message.

As another example, a vibration is provided by the alarm 153 responsive to receiving user input at the mobile terminal 100, thus providing a tactile feedback mechanism. Further, the various outputs provided by the components of the output unit 150 may be separately performed, or such output may be performed using any combination of such components.

In addition, the memory 160 is used to store various types of data to support the processing, control, and storage requirements of the mobile terminal 100. Examples of such data include program instructions for applications operating on the mobile terminal 100, call history, contact data, phonebook data, messages, pictures, video, etc.

Further, the memory 160 shown in FIG. 1 may be implemented using any type or combination of suitable volatile and non-volatile memory or storage devices including random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, card-type memory, or other similar memory or data storage device.

The terminal 100 also includes a controller 180 that typically controls the overall operations of the mobile terminal 100. For instance, the controller 180 performs the control and processing associated with voice calls, data communications, instant message communications, video calls, camera operations and recording operations. As shown in FIG. 1, the controller 180 may also include a multimedia module 181 for providing multimedia playback functions. The multimedia module 181 may be configured as part of the controller 180, or may be implemented as a separate component.

The controller 180 may perform a pattern recognition process for recognizing a writing input or a drawing input on the touch screen, as a text and an image, respectively. And, the controller may convert plane-type contents, still images and moving images into hologram images.

The power supply unit 190 receives external power or internal power and supplies appropriate power required for operating respective elements and components under the control of the controller 180.

Processes described herein may be implemented in a computer-readable or its similar medium using, for example, software, hardware, or any combination thereof.

For hardware implementation, the processes may be implemented by using at least one of application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and electronic units designed to perform the functions described herein. In some cases, such processes may be implemented by the controller 180 itself.

For software implementation, the processes, such as procedures or functions, may be implemented together with separate software modules that allow performing of at least one function or operation. Software codes can be implemented by a software application (or program) written in any suitable programming language. The software codes may be stored in the memory 160 and executed by the controller 180.

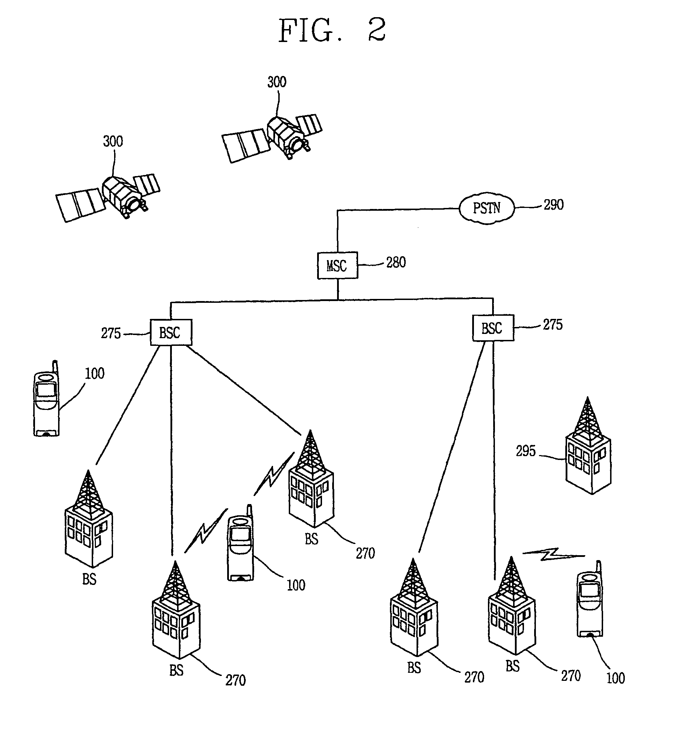

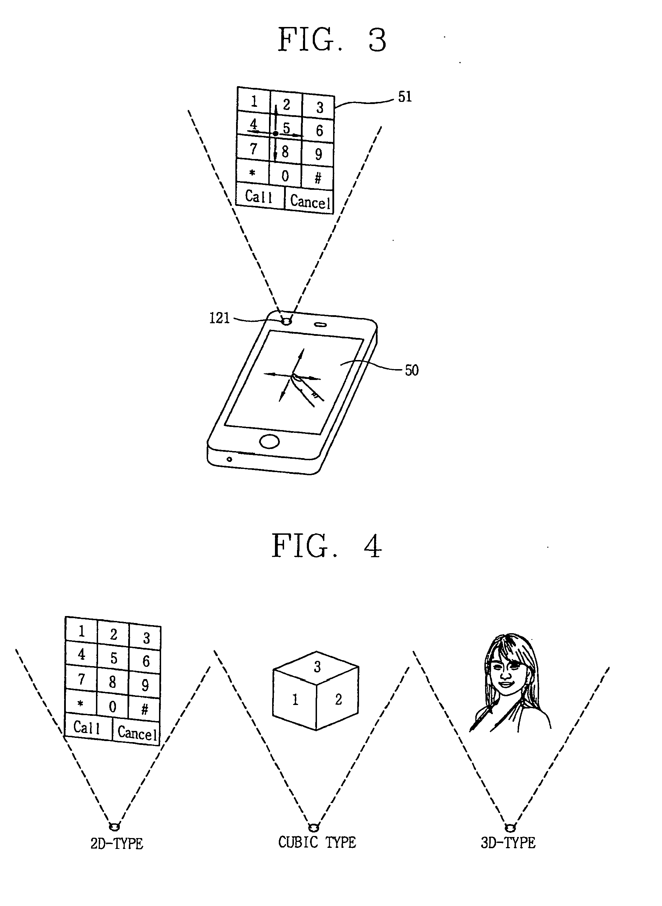

The mobile terminal according to the present disclosure will be explained in more details with reference to FIGS. 2 and 3. Hereinafter, a slide type mobile terminal will be explained for convenience. However, the present disclosure may not be limited to the slide type mobile terminal, but may be applied to various types such as a bar type, a folder type, a swing type, and a swivel type.

In addition, the mobile terminal 100 of FIG. 1 may be configured to operate within a communication system which transmits data via frames or packets, including both wireless and wireline communication systems, and satellite-based communication systems. Such communication systems utilize different air interfaces and/or physical layers.

Hereinafter, the communication systems where the mobile terminal of the present invention is operable will be explained with reference to FIG. 2.

Examples of such air interfaces utilized by the communication systems include, for example, frequency division multiple access (FDMA), time division multiple access (TDMA), code division multiple access (CDMA), and universal mobile telecommunications system (UMTS), the long term evolution (LTE) of the UMTS, and the global system for mobile communications (GSM). By way of a non-limiting example only, further description will relate to a CDMA communication system, but such teachings apply equally to other system types.

As shown in FIG. 2, a CDMA wireless communication system may include a plurality of mobile terminals 100, a plurality of base stations 270, a plurality of base station controllers (BSCs) 275, and a mobile switching center (MSC) 280. The MSC 280 is configured to interface with a public switch telephone network (PSTN) 290, and the MSC 280 is also configured to interface with the BSCs 275. Further, the BSCs 275 are coupled to the base stations 270 via backhaul lines. In addition, the backhaul lines may be configured in accordance with any of several interfaces including, for example, E1/T1, ATM, IP, PPP, Frame Relay, HDSL, ADSL, or _{X}DSL. Further, the system may include more than two BSCs 275.

Also, each base station 270 may include one or more sectors, each sector having an omnidirectional antenna or an antenna pointed in a particular direction radially away from the base station 270. Alternatively, each sector may include two antennas for diversity reception. In addition, each base station 270 may be configured to support a plurality of frequency assignments, with each frequency assignment having a particular spectrum (e.g., 1.25 MHz, 5 MHz).

The intersection of a sector and frequency assignment may be referred to as a CDMA channel. The base stations 270 may also be referred to as base station transceiver subsystems (BTSs). In some instances, the term "base station" may be used to refer collectively to a BSC 275, and one or more base stations 270. The base stations 270 may also be denoted as "cell sites." Alternatively, individual sectors of a given base station 270 may be referred to as cell sites.

As shown in FIG. 2, a terrestrial digital multimedia broadcasting (DMB) transmitter 295 is shown broadcasting to mobile terminals 100 operating within the system. In addition, the broadcast receiving module 111 (FIG. 1) of the mobile terminal 100 is typically configured to receive broadcast signals transmitted by the DMB transmitter 295.

FIG. 2 further illustrates several global positioning system (GPS) satellites 300. Such satellites facilitate locating the position of some or all of the mobile terminals 100. In FIG. 2, two satellites are shown, but positioning information may be obtained with greater or fewer satellites. In addition, the position-location module 115 (FIG. 1) of the mobile terminal 100 is typically configured to cooperate with the satellites 300 to obtain desired position information. However, other types of position detection technology, such as location technology that may be used in addition to or instead of GPS location technology, may alternatively be implemented. Some or all of the GPS satellites 300 may alternatively or additionally be configured to provide satellite DMB transmissions.

Further, during typical operation of the wireless communication system, the base stations 270 receive sets of reverse-link signals from various mobile terminals 100. The mobile terminals 100 engage in calls, messaging, and other communications. In addition, each reverse-link signal received by a given base station 270 is processed within that base station 270, and the resulting data is forwarded to an associated BSC 275. The BSC 275 provides call resource allocation and mobility management functionality including soft handoffs between the base stations 270. Further, the BSCs 275 also route the received data to the MSC 280, which provides additional routing services for interfacing with the PSTN 290. Similarly, the PSTN interfaces with the MSC 280, and the MSC 280 interfaces with the BSCs 275. The BSCs 275 also control the base stations 270 to transmit sets of forward-link signals to the mobile terminals 100.

The present invention provides a method for controlling a hologram screen when projecting a hologram image with using a mobile terminal, and a method for moving a hologram image by touching a keypad of the mobile terminal.

The mobile terminal according to the present invention is provided with a function for displaying plane-type menus, texts, a still screen and each type of contents by converting into a two-dimensional (2D) or three-dimensional (3D) hologram. Also, the mobile terminal according to the present invention is provided with a function for converting a voice into a text, then converting the text into a 2D hologram, and then displaying the 2D hologram.

FIG. 3 is a view showing an example of a method for controlling (manipulating) a hologram image with using a mobile terminal according to the present invention.

As shown in FIG. 3, once a user firstly selects a menu to be executed, a specific hologram image 51 is displayed through a hologram output unit, i.e., a hologram camera 121 (hereinafter, will be called a 'camera'). On the display unit 151, displayed is a screen panel (or touch panel) for controlling the hologram image 51, i.e., a management screen 50. The user may perform each control with respect to the hologram image 51, e.g., rotation, enlargement, contraction, screen out, etc., with using the displayed manipulation screen 50. Alternatively, while carrying the mobile terminal with his or her one hand, the user may perform each kind of control operations with respect to the hologram image through inputs using a pointer (finger, touch pen and so on) on the management screen 50.

The camera 121 serving as a hologram output unit is configured to perform a general capturing operation in a camera mode, and is configured to output downloaded hologram contents or hologram contents stored in the memory 160 in a hologram mode.

A hologram image output from the camera 121 may be changed by inputting a specific key.

As shown in FIG. 4, a hologram image projected through the camera 121 may be categorized into a two-dimensional (2D) type, or a cubic-type that a different hologram image is displayed on each cubic surface or a three-dimensional (3D) type.

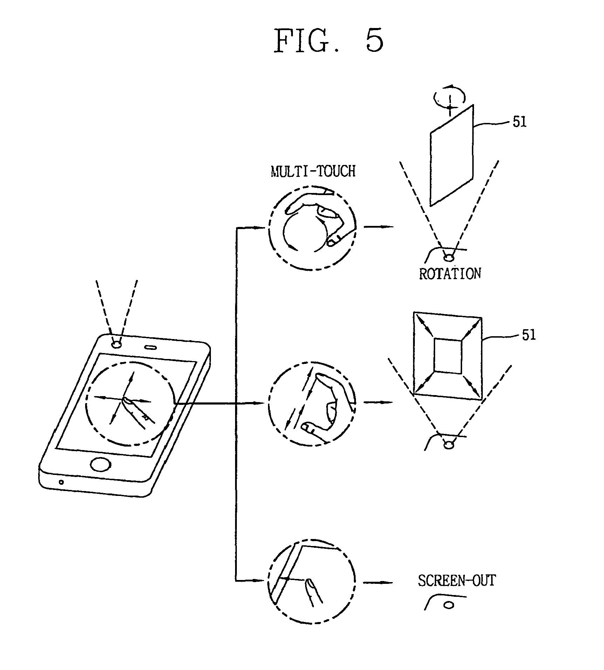

FIG. 5 is a view showing an example of a hologram image displayed through a management screen according to the present invention. As shown in FIG. 4, a user may perform rotation, enlargement or contraction, screen out, etc. with respect to the hologram image 51, by multi-touching the management screen 50. However, the present invention is not limited to this. That is, the control operation of the present invention applied to a general image on the display unit through short-touch, long-touch and multi-touch may be also applied to the hologram image.

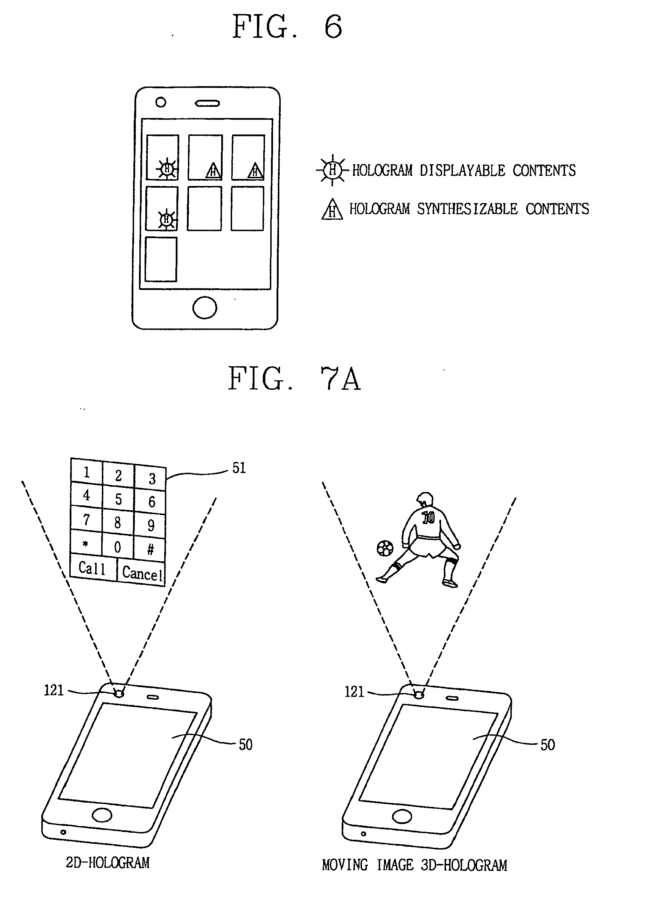

FIG. 6 is a view showing an example of images on a hologram menu according to the present invention.

In the present invention, hologram displayable contents (programs or images) and hologram non-displayable contents are separately displayed on a hologram menu. For instance, hologram displayable contents are represented by displaying "H" on a circular icon, and hologram synthesizable contents are represented by displaying "H" on a triangular icon. Accordingly, a user may output a hologram image with respect to desired contents by checking the icons on the hologram menu.

FIGS. 7A to 7C are views each showing an example of contents which can be displayed in the form of a hologram image according to the present invention.

As shown in FIG. 7A, the controller 180 or the multimedia module 181 may display plane-type contents or a still image by converting into a two-dimensional (2D) hologram, and may display a moving image by converting into a three-dimensional (3D) hologram.

For instance, once a user commands a hologram output with respect to a message written on a message writing screen, or a specific message selected from a transmitting/receiving message list stored in the memory 160, the controller 180 converts the selected text-type message into a 2D hologram. Then, the controller 180 outputs the converted 2D hologram through the camera. In this case, the text image displayed in the form of a hologram may be a fixed type that the entire message is fixed, or a toggle type that lines move one by one in the unit of predetermined characters, or a type that a voice and a hologram are simultaneously reacted with each other according to a voice expression.

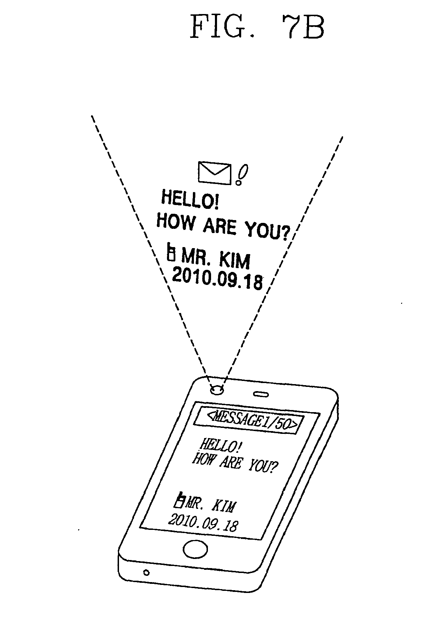

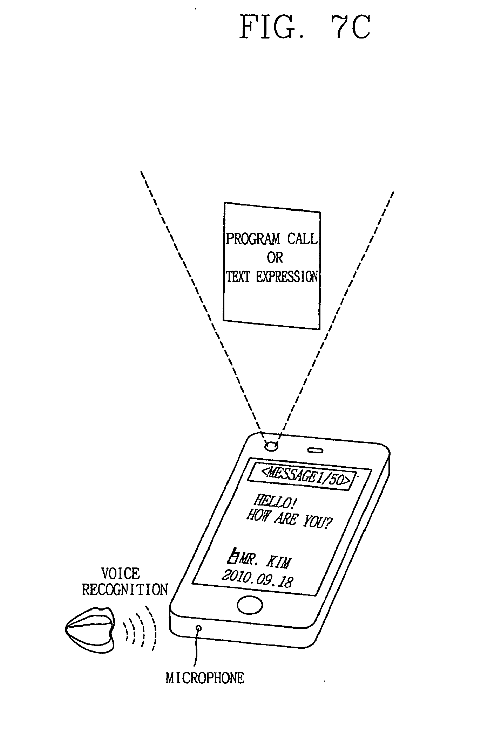

In the present invention, a user's voice as well as texts may be recognized, and the recognized voice may be displayed in the form of a hologram image. FIG. 7C illustrates an example of a method for displaying a hologram image through voice recognition. Once a user inputs his or her voice through the microphone 122 of the A/V input unit 120 provided at one side of the mobile terminal in a voice recognition mode, the controller 180 may recognize the user's voice. Then, the controller 180 may convert the recognized voice into a text, and then convert the text into a 2D hologram again, thereby displaying the 2D hologram as shown in FIG. 7B. Alternatively, the controller 180 may call a specific program according to input of a user's voice, and may display the specific program in the form of a hologram image.

Generally, a hologram image may be set though a hologram menu setting. More concretely, a user may select a type (refer to FIG. 4), a size, a color of a hologram image to be displayed, and each option, by setting a hologram menu.

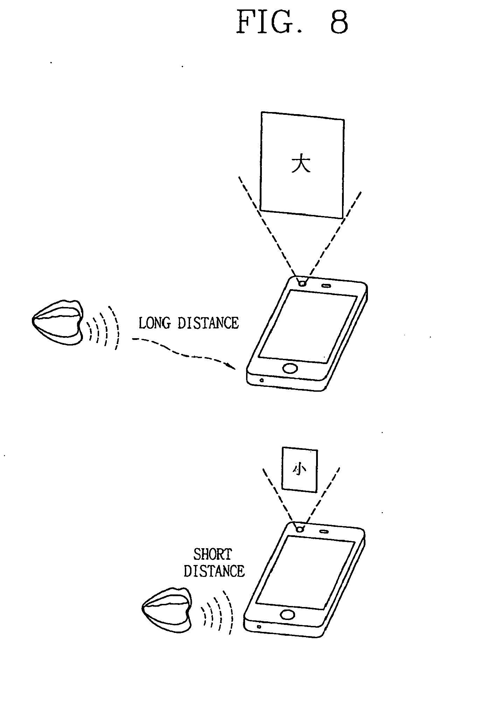

FIG. 8 is a view showing an example of a method for controlling a size of a hologram image according to the present invention.

As aforementioned, a size of a hologram image is controlled through a hologram menu. In a state that an initial size of a hologram image has been preset through the hologram menu, the preset initial size of the hologram image may be controlled according to a user's input. Alternatively, the preset initial size of the hologram image may be automatically controlled according to a user's distance.

This function is performed to prevent invasion of a user's privacy resulting from that a hologram image is easily exposed to another party.

Once a user approaches to a mobile terminal from which a hologram image is being emitted, the controller 180 detects the user's approach. Then, the controller 180 converts a current mode of the mobile terminal into a whispering mode, and automatically contracts a size of the hologram image. The controller 180 may detect the user by a well-known technique, especially, a face recognition technique. Alternatively, the controller 180 may decrease a size of the hologram image according to a user's approaching distance, and may convert a current mode of the mobile terminal into a whispering mode when the user has come near the mobile terminal by a predetermined distance.

In the present invention, a size of a hologram image may be controlled according to a size of a user's voice at a fixed position. More concretely, a size of a hologram image is controlled according to a size of a user's voice input at the same distance in an assumption that a user's voice input at the same distance has nearly the same size.

In the present invention, the controller 180 may control a display size of a hologram image with consideration of a user's approach and a voice size. Alternatively, the controller 180 may display a hologram image on a screen having a size preset by a user, through analysis of the user's voice substantially input.

Generally, a hologram image is displayed by emitting predetermined light. Accordingly, clarity (visibility) of the displayed hologram image is influenced by peripheral circumstances. In the present invention, a hologram image may be changed by peripheral circumstances such as peripheral luminance, brightness and a chroma. For instance, a color of a background light (reference beam) of a hologram image is changed according to peripheral luminance, brightness and a chroma.

In the present invention, a hologram image is emitted through the camera provided at one side of the mobile terminal. The camera is configured to perform a capturing operation in a general capturing mode, and to display predetermined contents by projecting object beam onto reference beam in a hologram mode.

In the present invention, one hologram camera is provided. However, the present invention is not limited to this. More concretely, two hologram cameras may be provided to simultaneously display different menus or contents. For instance, contents to be transmitted are projected through one hologram camera, and received contents are projected through another hologram camera. This may allow a user to simultaneously view different hologram images.

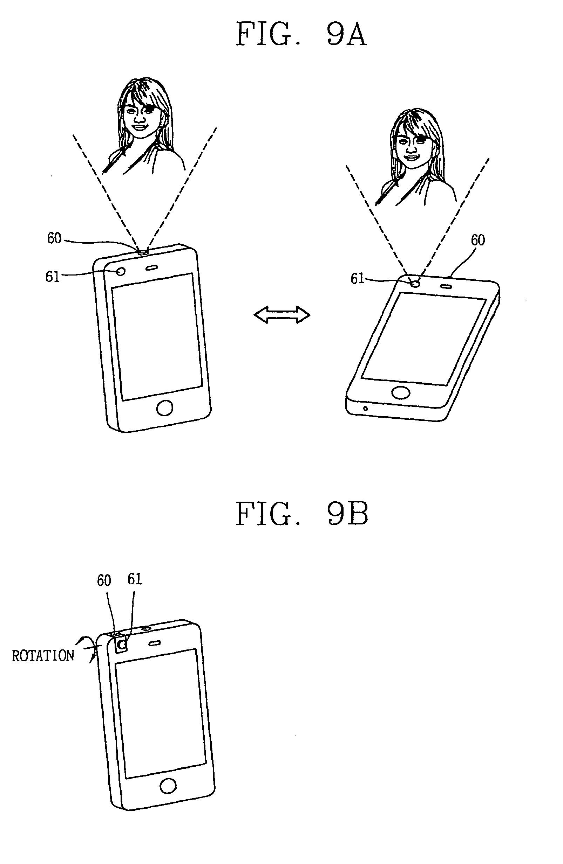

FIGS. 9A and 9B are views each showing an example of a type of a hologram camera according to the present invention.

Referring to FIG. 9A, a first hologram camera 60 and a second hologram camera 61 are provided at different positions, and display a reception image and a transmission image. Here, an image displayed through the second hologram camera 61 for displaying a transmission image may be replaced by an image displayed on a current screen. Alternatively, a reception image and a transmission image displayed through the first and second hologram cameras 60 and 61 may be switched from each other through simple key manipulations. More concretely, a transmission image may be displayed on the first hologram cameras 60, whereas a reception image may be displayed through the second hologram cameras 61. This may be effective when applying a hologram to a video call.

Alternatively, both of the first and second hologram cameras 60 and 61 may be used to display only reception images or only transmission images.

FIG. 9B shows an example to simultaneously display a reception image and a transmission image on the first and second hologram cameras 60 and 61 provided a the same position. Here, operations of the first and second hologram cameras 60 and 61 may be also switched with each other through key manipulations. When the operations of the first and second hologram cameras 60 and 61 are switched with each other, positions of the first and second hologram cameras 60 and 61 are exchanged from each other by a rotary lens.

A user may manipulate a hologram image through the management screen 50 of the mobile terminal with grasping the mobile terminal by using his or her one hand. As shown in FIGS. 9A and 9B, the user may perform a video call with another party by using two hologram cameras. However, when performing a video call with another party through a hologram image by using two hologram cameras, the mobile terminal may shake due to the user's hand motion or a vehicle's motion (when the user gets on a vehicle). If the mobile terminal shakes, the hologram image may also shake to cause a capturing angle of the mobile terminal not to be within a predetermined range. As a result, the user's image may not be transmitted to another party.

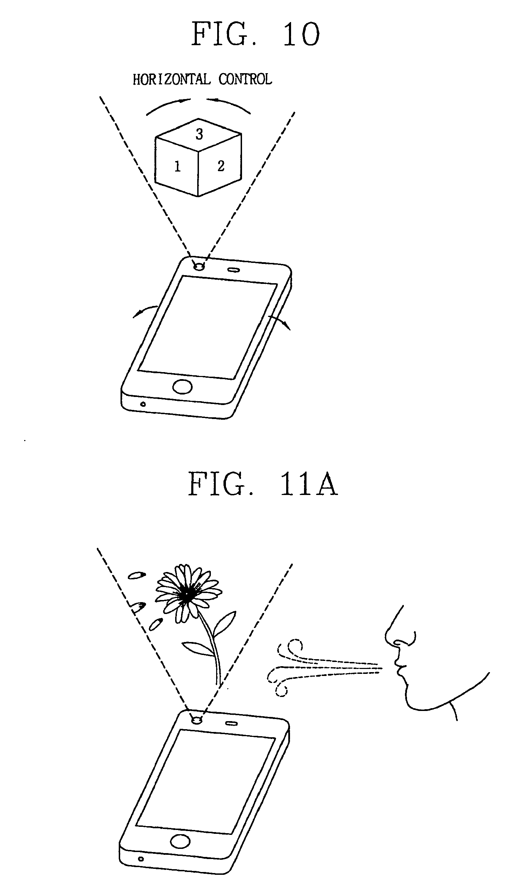

FIG. 10 is a view showing an example to maintain a horizontal state of a hologram image according to the present invention.

In the present invention, in a case that the mobile terminal severely shakes while a user performs a video call, the controller 180 detects the shaking to inform to another party. Here, shake of the mobile terminal may be detected by a gradient sensor or a gyro sensor, and so on. Especially, when the mobile terminal has shaken to have a capturing angle which exceeds a predetermined range, the controller 180 may automatically change an emitting angle of a hologram image captured by the hologram camera. This may allow a user's image to be normally captured to be transmitted to another party.

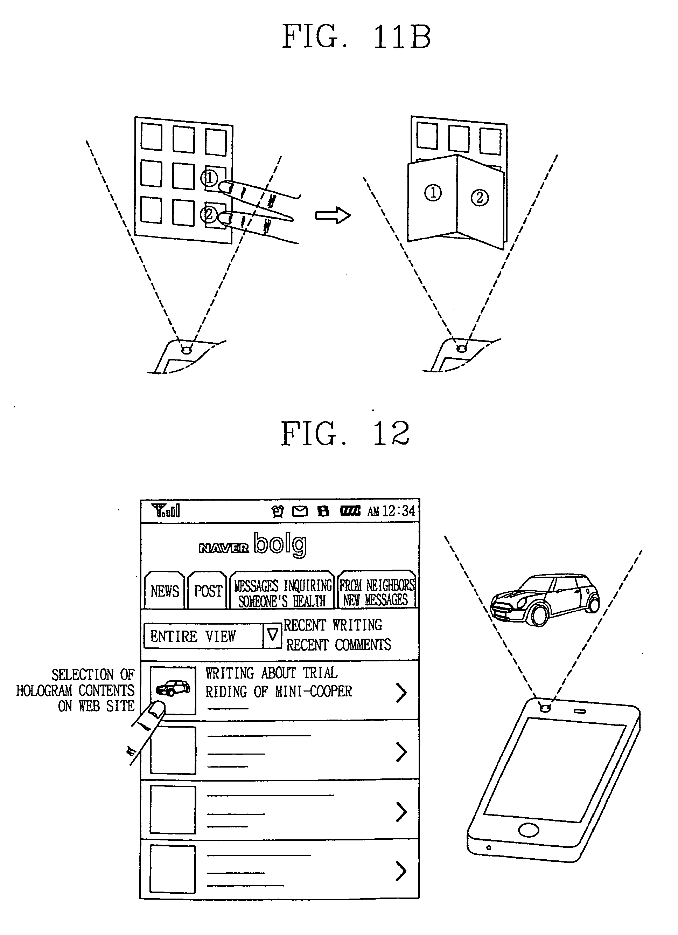

FIGS. 11A and 11B are views each showing an example of a hologram image implemented according to a user's operation.

FIG. 11A is a view showing an example that a hologram image is responsive to an external environment. For instance, a displayed hologram image having a tree shape is moved as if it substantially has shaken or vibrated. The controller 180 detects an external reaction inputted to the hologram image, and displays the external reaction on the hologram image. Alternatively, the controller 180 may control a motion of the displayed hologram image by analyzing an image stored together with the hologram image.

FIG. 11B is a view showing an example to control a hologram image in a user's touching manner.

Generally, a hologram screen may have less restrictions in spatial utilizations than a general screen of a mobile terminal. Accordingly, a multi-tasking may be easily performed on the hologram screen. For instance, in a state that a hologram menu including a plurality of hologram images has been displayed, when a user selects two images in a multi-touching manner, the controller 180 displays a multi-view on a hologram screen. More concretely, the controller 180 divides the hologram screen into two parts, and displays one image on one screen and displays another image on another screen. Here, the selected images may be displayed from the left to the right, according to selected orders or priorities thereof.

Each hologram image may be individually selected by a user's touch, and the selected hologram image may be displayed on the hologram screen.

As aforementioned in FIG. 6, hologram displayable contents (programs or images) and hologram non-displayable contents are displayed on the hologram menu. In the same manner, as shown in FIG. 12, hologram displayable contents are provided on an FTP server or a web site. Accordingly, in the present invention, when specific contents provided on an FTP server or a web site are executed, the contents may be displayed as a hologram image.

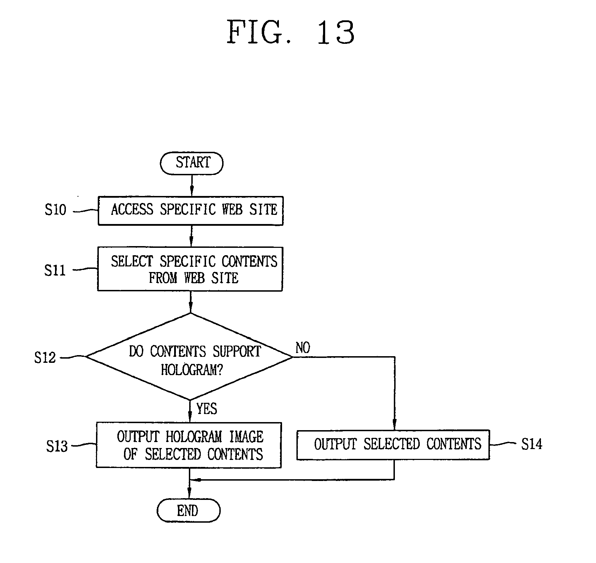

FIG. 13 is a flowchart showing an example to display hologram contents of a web site according to the present invention.

As shown in FIG. 13, a user accesses a specific web site (naver, daum and so forth), and selects specific contents during web surfing to execute the specific contents (S10, S11). Once the specific contents are selected, the controller 180 checks whether the specific contents support a hologram (S12). If the specific contents support a hologram as a result of the check, the controller 180 displays a hologram image of the specific contents through a hologram camera (S13). On the other hand, if the specific contents do not support a hologram as a result of the check, the controller 180 displays the specific contents on the display unit 151 (S14).

In the present invention, when performing a video call by using a hologram image, a user's image may be transmitted to another party and another party's image may be displayed in the form of a hologram. Furthermore, data may be shared between the user and another party.

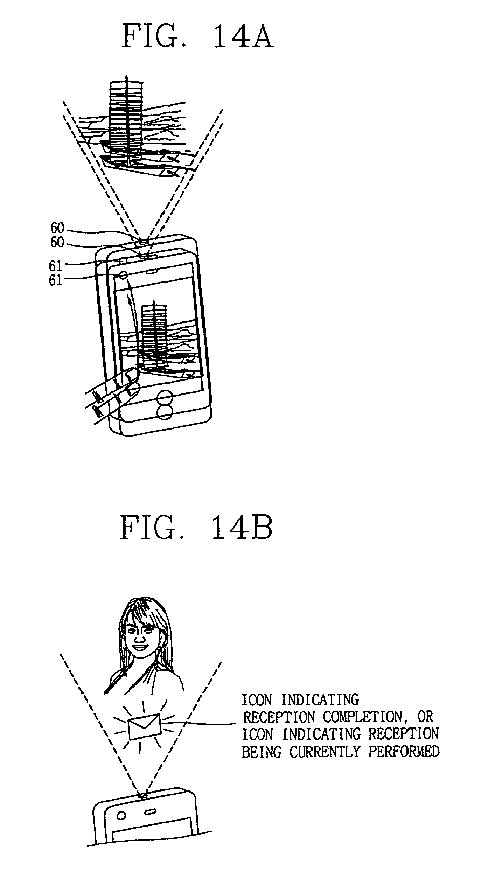

FIGS. 14A and 14B are views each showing an example to share data at the time of a holographic call according to the present invention.

As shown in FIG. 14A, the controller 180 displays another party's hologram image received through the first hologram camera 60. Then, the controller 180 captures a user's image through the second hologram camera 61, and transmits the captured image to another party. Here, on the management screen (display unit), may be displayed specific contents selected by the user, such as texts, images, pictures, and photos.

While performing a holographic video call with another party, the user may display contents being displayed on the display unit 151 as a hologram image in a touching manner, or may display a hologram image on the display unit 151. For instance, as shown in FIG. 1, once the user touches contents being displayed on the display unit 151 and drags the contents upward, the controller 180 replaces the contents by a hologram image displayed through the first hologram camera 60, and displays the contents. Alternatively, once the user touches a hologram image being displayed and drags the hologram image downward in a touching manner, the controller 180 replaces the hologram image by an image displayed on the display unit 151, and displays the hologram image.

Once the user touches a corresponding hologram image during a hologram communication, or in a state contents on the screen are displayed as a hologram image, the controller 180 transmits the hologram image to another party as shown in FIG. 4. At the same time, the controller 180 displays an icon indicating that another party is being received, together with the hologram image. Then, once another party has received the contents, the controller 180 displays an icon indicating that the contents have been successfully received, together with the hologram image. That is, in the present invention, when receiving information indicating whether contents have been successfully received or not from another party's terminal, and sharing data during a holographic call, an icon regarding transmission and reception of data is displayed together with the hologram image.

The present invention provides various control methods using a hologram image. Generally, when two or more hologram images are displayed in an overlapping manner, an interference may occur at an overlapped part between the hologram images. The present invention provides a function to control one hologram by another hologram with using an interference phenomenon occurring at an overlapped part between the hologram images.

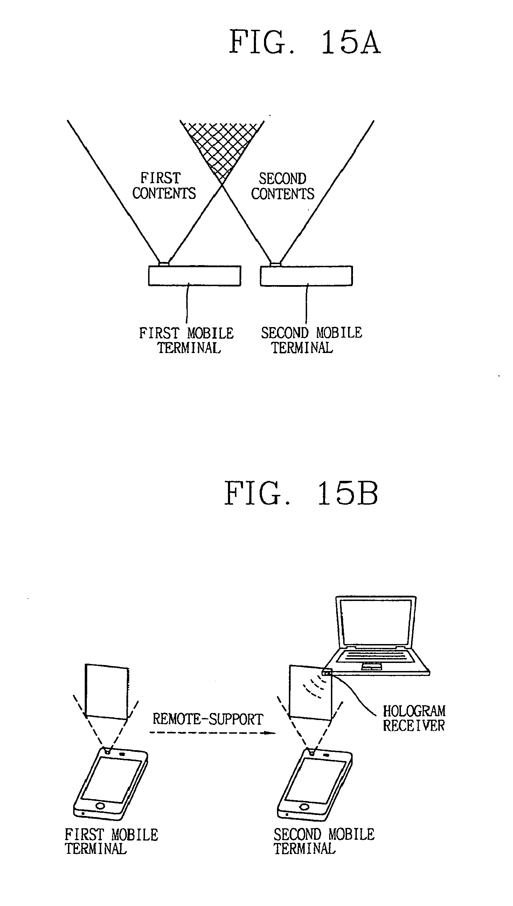

FIGS. 15A and 15B are views each showing an example of a control function using a hologram according to the present invention.

As shown in FIG. 15A, when two mobile terminals approach to each other, an interference may occur between hologram images (first and second contents) emitted from hologram cameras provided at the two mobile terminals. If the interference occurs between the two hologram images, one hologram image controls another hologram image. For instance, as first and second mobile terminals perform transmission and reception of contents therebetween, first contents of the first mobile terminal are synchronized with second contents of the second mobile terminal. Furthermore, game items are exchanged between the first and second mobile terminals.

FIG. 15B is a view showing an example to remotely control another device by transmitting a hologram image to another mobile terminal. As shown in FIG. 15B, a hologram image is transmitted to a second mobile terminal from a first mobile terminal, and then is displayed through a hologram camera of the second mobile terminal. The displayed hologram image is received by another user's PC having a hologram receiver. By the received hologram image, another user's PC is controlled. Accordingly, a user of the first mobile terminal may remotely control each type of apparatuses having hologram receivers by using a hologram image.

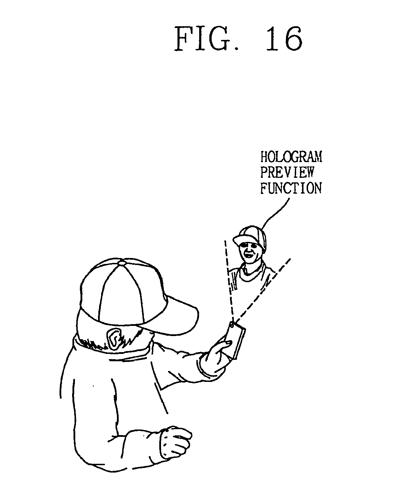

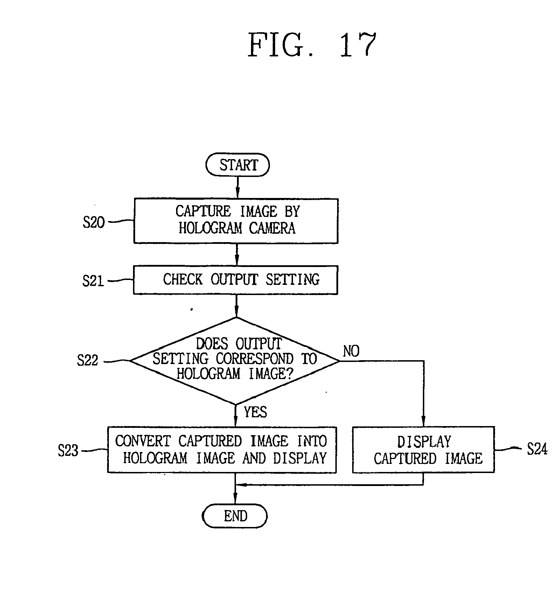

FIG. 16 is a view showing an example of a function of a hologram camera according to the present invention, and FIG. 17 is a flowchart showing processes for providing a hologram preview function when capturing an image with using a hologram camera according to the present invention.

Referring to FIGS. 9A and 9B, functions of two hologram cameras were aforementioned. When capturing an image with using a hologram camera, a hologram preview function is provided as shown in FIG. 16. As shown in FIG. 17, once an image is captured by a hologram camera, the controller 180 checks whether an image output has been set as a general output or a hologram output (S20∼S22). If the image output has been set as a hologram output, the controller 180 converts the captured image into a hologram image and displays the converted hologram image (S23). On the other hand, if the image output has been set as a general output, the controller 180 displays the captured image on the display unit 151 (S24).

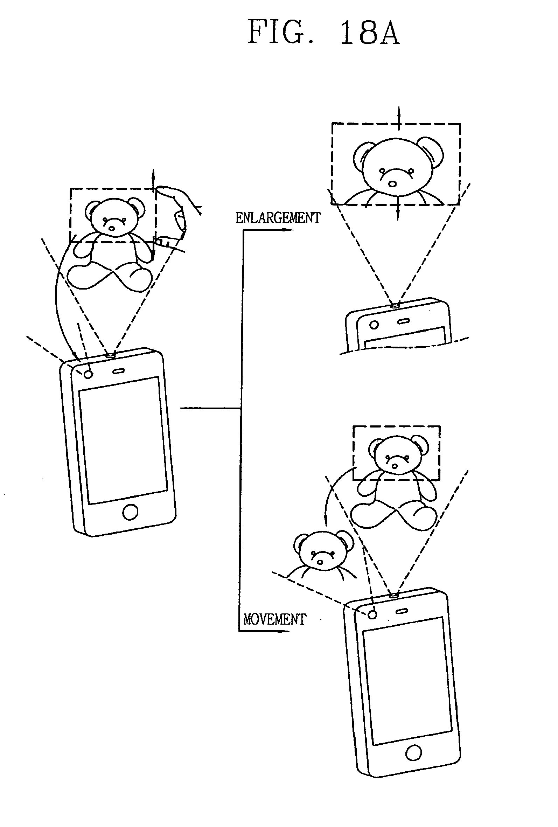

FIGS. 18A to 18C are views showing various examples to control a part of a hologram image according to the present invention.

Referring to FIGS. 18A to 18C, a hologram image may be partially enlarged, contracted, moved, or may undergo a color change. Alternatively, a part of a hologram image may be captured to be moved to another mobile terminal, or may be synthesized with another hologram.

As shown in FIG. 18A, a part of a hologram image (e.g., face) may be selected thus to undergo a space division. Then, the selected partial image may be enlarged or contracted. When two hologram cameras are implemented, only the selected partial image may be displayed through another hologram camera. Here, the controller 180 detects a user's touch gesture with respect to the hologram image, thereby controlling display of the selected partial image. When being moved out of a hologram image by a user, the selected partial image is displayed, as an object image, by reference beam projected by another hologram camera. When the user moves an entire hologram image displayed through the first hologram camera 60 to a second hologram camera, the first hologram camera 60 may be automatically turned off.

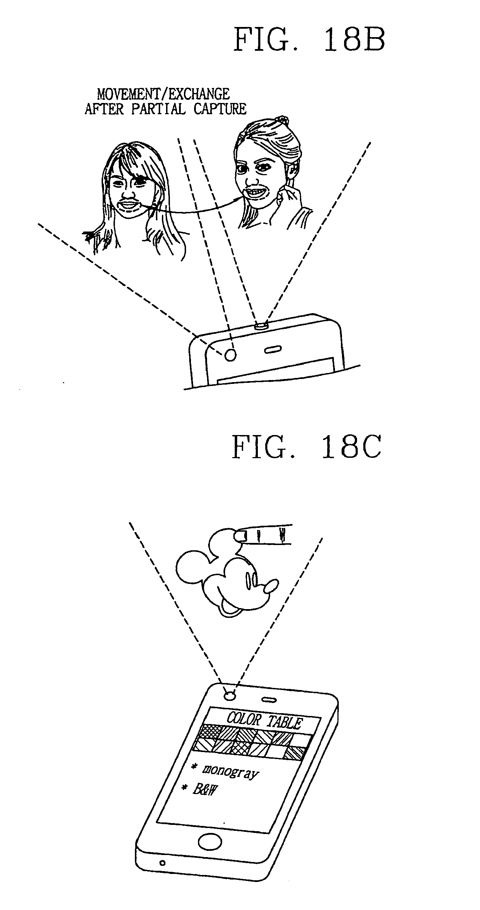

FIG. 18B is a view showing an example to move or synthesize a captured part of a hologram image according to the present invention.

In a state that two contents (e.g., faces) are displayed through two hologram cameras, a user may capture specific parts (e.g., noses) of hologram images, and then may move the captured parts to one side or may synthesize the captured parts in an exchanging manner. Here, a part to be captured may include a part of an image or a picture, or a specific word.

FIG. 18C is a view showing an example to correct a color of a part of a hologram image according to the present invention.

As shown in FIG. 18C, a user may touch a specific part of a hologram image, and change a color of the touched specific part. Here, the specific part of the hologram image may be selected by touch in a predetermined shape. Once the user performs a long touch or a double touch with respect to the selected specific part (head part), the controller 180 displays, on the display unit (management screen) a color table for color selection by the user. If the user selects a desired color (e.g., red) from the displayed color table, the controller 180 changes a color of the selected specific part (head part) into the selected color (red).

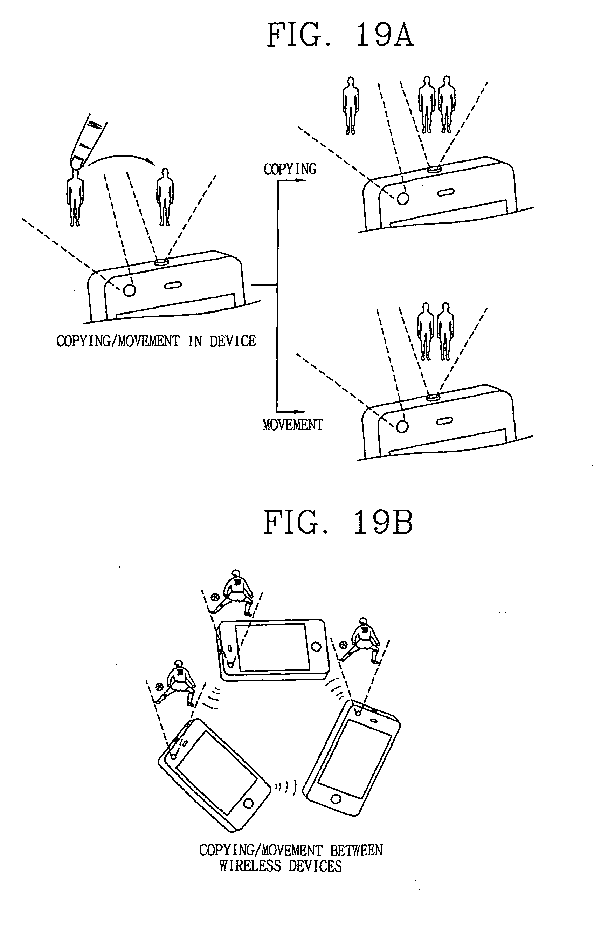

FIGS. 19A and 19B are views showing examples to move a hologram image in a copying manner. FIG. 19A shows an example to move a hologram image in a copying manner in a mobile terminal, whereas FIG. 19B shows an example to move a hologram image in a copying manner between mobile terminals.

As shown in FIG. 19A, when a mobile terminal is provided with two hologram output units, i.e., two hologram cameras, hologram images displayed through the two hologram output units may be displayed as one hologram image.

More concretely, when a user touches one hologram image and drags the touched hologram image to outside of a reference image, the hologram image may be copied onto another hologram image or may be moved to another hologram image. If one hologram image is moved to another hologram image, the hologram output unit having no hologram image is automatically turned off.

In a case that a plurality of mobile terminals are provided with two or more hologram output units, hologram images outputted from the hologram output units may be overlapped with one another, or may be copied or moved between the mobile terminals by using a communication device (e.g., Ad hoc).

Generally, a hologram image may be freely displayed on an open space. This may require a restriction function so as to prevent invasion of a user's privacy. As aforementioned, a display size of a hologram image is controlled according to a user's distance and a voice size for protection of a user's privacy.

The present invention is not limited to this, but may protect a user's privacy by controlling a display angle of a hologram image through a personal protection setting.

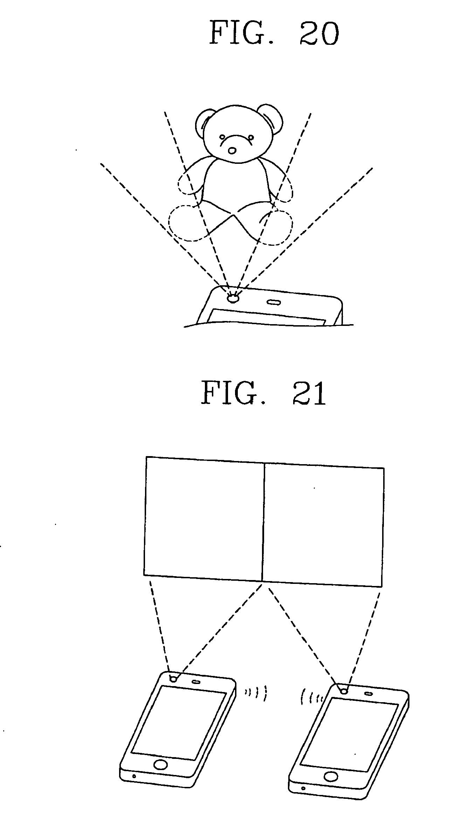

FIG. 20 is a view showing an example of a hologram restricting function for protection of personal information according to the present invention.

As shown in FIG. 20, a user may preset a hologram image to be clearly viewed only at a specific viewing angle, not at an entire viewing angle. Accordingly, when the user is located at a position which is out of the range of the preset specific viewing angle, a hologram image may be displayed in a blurred state.

FIG. 21 is a view showing an example to generate an enlarged hologram image by combining hologram images between devices with each other according to the present invention.

There has been already disclosed a method for displaying an extended (wide) image (e.g., multi-vision) by dividing an image displayed on a screen of a mobile terminal into a predetermined ratio, and then by displaying the divided image onto another display device. This concept may be equally applied to a hologram. In order to generate an extended (wide) hologram image, data is shared between mobile terminals. In this state, if an image ratio is wirelessly adjusted, hologram images are displayed through a plurality of hologram output units. Then, a user may implement one extended (wide) hologram image (holography) by combining the displayed hologram images with each other.

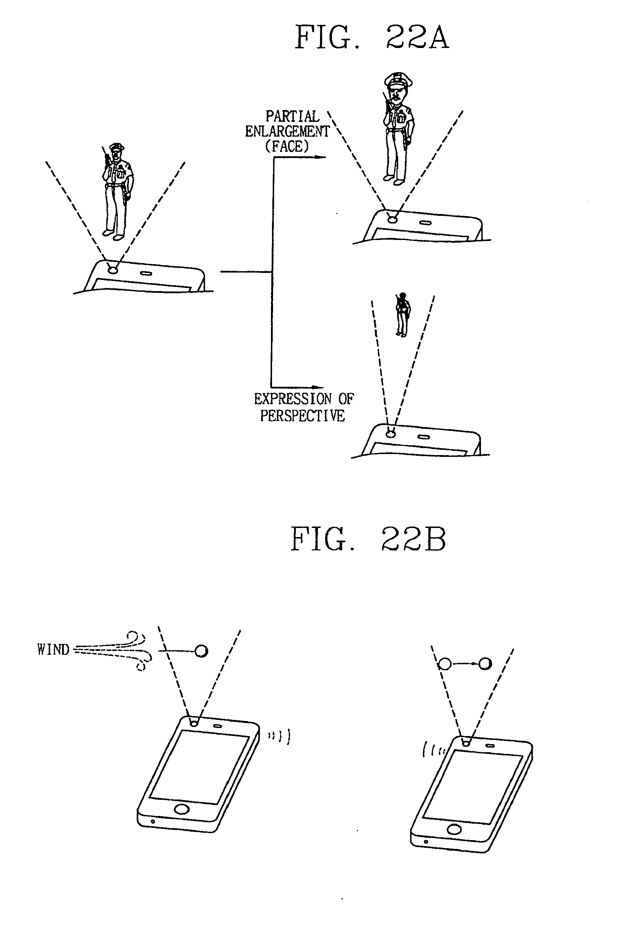

FIG. 22A is a view showing an example to a hologram distorting function according to the present invention.

The hologram distorting function is used to provide fun to a user by distorting a displayed hologram image, and may include a partial enlargement, a perspective, black and white, sepia, and so on. A type of the hologram distorting function may be selected by a user through a hologram menu.

FIG. 22B is a view showing a function to represent a texture of a hologram image according to the present invention. This function is performed so as to allow a user to feel a texture when controlling or contacting a hologram image, and may be applied to games, and so forth.

For instance, the controller 180 may control a user to feel a texture of a hologram image through vibrations of the mobile terminal or electrical signals. Alternatively, the controller 180 may control a user to feel a texture of a hologram image through his or her sense organs stimulated by light and far infrared rays of the hologram image. Still alternatively, the controller 180 may control a user to feel a texture of a hologram image through a method of stimulating a sense of touch, the method using an ultrasonic wave radiation pressure. However, the present invention is not limited to this. More concretely, a user may move a specific object (a ball in case of a baseball game) directly or by using wind. Alternatively, the controller may provide a perspective to a displayed image object, thereby displaying the image object as if it was moving. Still alternatively, the controller may represent a texture of a hologram image by providing each piece having a different shape and a different movement, like a jigsaw puzzle game.

In the present invention, a hologram image is basically input through a user's touch using a finger. However, the present invention is not limited to this. More concretely, a hologram image may be input through an external input device.

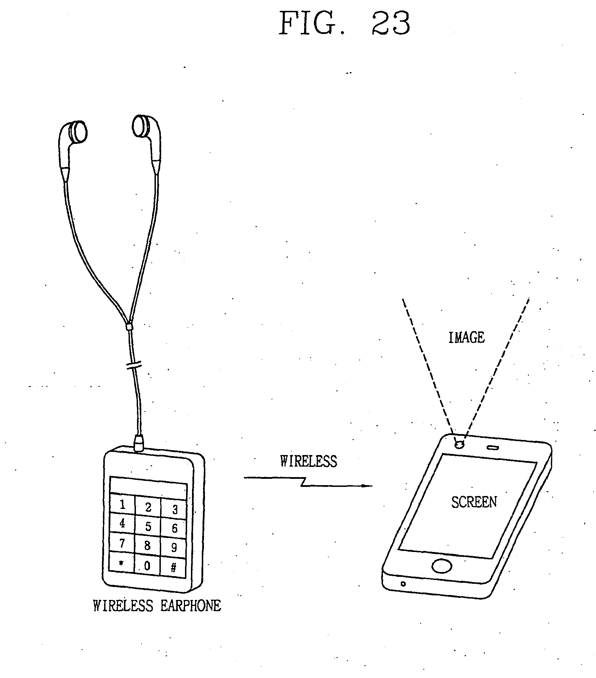

FIG. 23 is a view showing an example to display a hologram image through an external input device according to the present invention.

As shown in FIG. 23, a user may display a hologram image of predetermined contents through a hologram output unit of the mobile terminal, not by using his or her fingers, but by using a wireless earphone having a microphone and a keypad. The controller 180 recognizes the user's voice through a wireless communication with the wireless earphone, and then performs an operation corresponding to the recognized voice (refer to FIG. 7c).

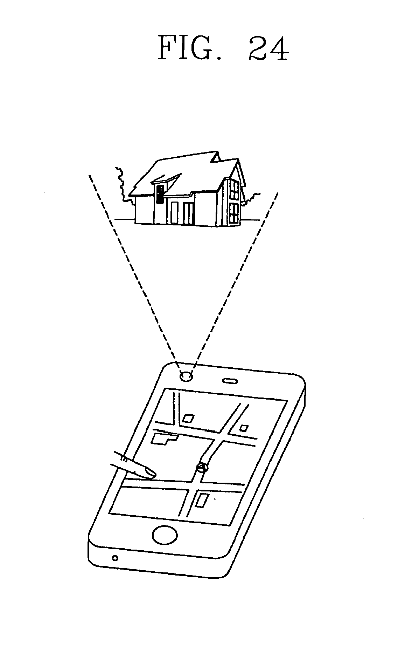

FIG. 24 is a view showing an example to provide a hologram distance viewer according to the present invention.

As shown in FIG. 24, once a user selects a specific area or object on a map while driving a car, the controller 180 partially or entirely displays a hologram image of the selected specific area or object through a hologram output unit.

A recent communication network may be provided with a small capacity of memory when transmitting or receiving a full 3D image or a hologram image. In order to solve the small capacity of memory, a transmission amount of data may be reduced by transmitting only movement information and background information. In a method for transmitting movement information, when a figure image is displayed, positions of joints are checked as three-dimensional coordinates. If positions of the joints are changed, only a vector quantity is transmitted to a receiving side. The receiving side moves the coordinates of the joints being currently displayed, according to the received vector quantity, thereby displaying movements. For instance, a receiving side displays an avatar and a background. Once a transmitting side has transmitted movement information to the receiving side, a holographic call is performed in a state that the avatar is moving.

To the present invention, a hologram image filtering function may be applied. A user may perform a hologram image filtering function by setting colors, black and white, and monogray.

A hologram image applied to the present invention may be used as a flash. More concretely, a bright hologram image may be output through a hologram output unit, and may be used as a flash. Alternatively, a Morse code function may be applied to the present invention. More concretely, a hologram image may be output only when a touch panel, i.e., a management screen is touched, and the mobile terminal may be used as a Morse code output device.

In the present invention, a position of the mobile terminal may be easily detected by using a hologram image. When a user wishes to find his or her mobile terminal at night, the user tries a call or sends a text message (SMS) to a specific number stored in the mobile terminal. Once the call or the text message (SMS) has been received, the controller 180 converts a current mode of the mobile terminal into a hologram mode, and outputs a preset hologram image through a hologram output unit. This may allow the user to easily find the mobile terminal based on the output hologram image. Especially, when the mobile terminal has been set to be mute, the controller 180 may output sound together with the hologram image.

In the present invention, a hologram image (2D or 3D) is stored in the memory 160. However, due to a very large capacity, only a hologram image corresponding to a specific section selected by a user may be stored, or a hologram image may be stored in a compression manner. If necessary, a 3D-hologram image may be stored after being converted into a 2D-hologram image. Alternatively, a text hologram image may be stored after being converted into a text, thereby enhancing efficiency of a storage space.

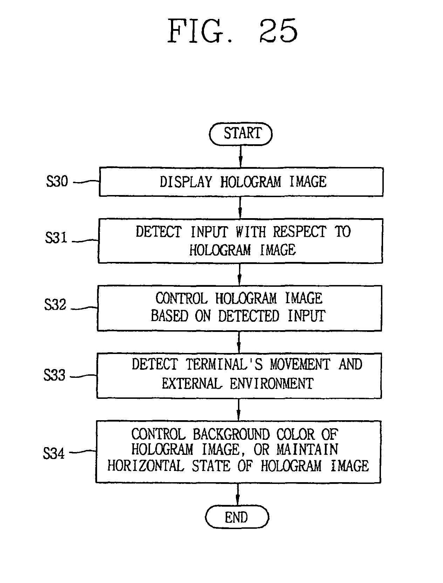

FIG. 25 is a flowchart showing a method for controlling a hologram of a mobile terminal according to the present invention.

As shown in FIG. 25, the controller 180 controls a user to select specific contents stored in a specific mobile terminal or to select specific contents during web surfing, or to display one or more hologram images through a hologram output unit during a video call (S30).

Once the hologram image has been displayed, the user performs a multi-touch on the management screen, and the controller 180 detects the multi-touch thereby to perform a rotation, an enlargement/contraction, a screen-out, etc. with respect to the hologram image (S31, S32). The user's manipulation may be performed through a direct touch on the hologram image. In this case, the controller 180 performs an enlargement/contraction, an exchange, a movement, etc. with respect to the hologram image according to the user's multi-touch, between one hologram output unit and the display unit 151, or between one hologram output unit and another hologram output unit.

The controller 180 detects shake of the mobile terminal during a video call and peripheral circumstances (S33), thereby controlling a background color of a hologram image being currently displayed, or maintaining a horizontal state of a hologram image (S34). When performing a video call by using one or more hologram output units, the controller 180 controls each operation such as an exchange, a movement and a copying of a hologram image between hologram output units, according to a user's touch input.

As aforementioned, in the present invention, texts, moving images, contents, etc. are displayed as a hologram image. And, the displayed hologram image may be variously controlled according to a user's touch. This may solve spatial limitations of a general mobile terminal, and may implement a holographic video call more effectively.

The aforementioned method may be implemented as a program code stored in a computer-readable storage medium. The storage medium may include ROM, RAM, CD-ROM, a magnetic tape, a floppy disc, an optical data storage device, etc. And, the storage medium may be implemented as carrier wave (transmission through the Internet). The computer may include the controller of the mobile terminal.

The foregoing embodiments and advantages are merely exemplary and are not to be construed as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A hologram controlling method of a mobile terminal (100), the method comprising:
displaying (S30) a hologram image;
detecting (S31) an input with respect to the hologram image; and
controlling (S32) the hologram image based on the detected input; and
storing the controlled hologram image.

2. The method of claim 1, wherein the hologram image includes a two-dimensional hologram, a three-dimensional hologram and a cubic-type hologram, wherein the two-dimensional hologram includes an image converted from a prestored plane type image, a still image or a voice, and the three-dimensional hologram includes an image converted from a moving image.

3. The method of claim 1, wherein the hologram image is configured to have a background color automatically changed according to peripheral circumstances, and to have an emitting angle automatically changed according to shake so as to maintain a horizontal state.

4. The method of claim 1, wherein the step (S30) of displaying a hologram image includes:
receiving specific contents;
checking whether the received specific contents support a hologram;
displaying a hologram image corresponding to the specific contents when the specific contents support a hologram; and
displaying the hologram image on a display unit when the specific contents do not support a hologram.

5. The method of claim 1, wherein the hologram image is displayed through one or more hologram output units (121), and is moved between the hologram output units (121) and between the hologram output unit (121) and the management screen.

6. The method of claim 5, wherein the hologram image is moved, exchanged, synthesized and copied between the hologram output units (121) through a user's touches or communications and approaches between devices, and a viewing angle of the hologram image is controlled through a privacy protection setting.

7. The method of claim 5, wherein the hologram image is divided in three dimensions by touch, is partially or entirely enlarged or contracted by drag, and has a changed color by partial touch.

8. The method of claim 1, wherein the hologram image is displayed in a screen dividing manner by a multi-touch, and the hologram image is changed by external factors like wind, vibrations and sounds.

9. The method of claim 1, wherein a display size of the hologram image is automatically controlled according to a user's distance, and an entire part or a specific part of the hologram image is moved, enlarged and contracted.

10. A mobile terminal (100), comprising:
a hologram output unit (121) configured to display a hologram image;
a display unit (151) configured to display contents;
a controller (180) configured to control the displayed hologram image based on an input with respect to the hologram image; and
a memory configured to store the controlled hologram image.

11. The mobile terminal of claim 10, wherein the hologram image includes a two-dimensional hologram, a three-dimensional hologram, and a cubic-type hologram, wherein the two-dimensional hologram includes an image converted from a prestored plane type image, a still image or a voice, and the three-dimensional hologram includes an image converted from a moving image.

12. The mobile terminal of claim 10, wherein the controller (180) automatically changes a background color of the hologram image according to peripheral circumstances, and automatically changes an emitting angle according to shake so as to maintain a horizontal state of the hologram image.

13. The mobile terminal of claim 10, wherein an input of the hologram image includes an input through a management screen or a direct input on the hologram image, and the input includes a touch operation.

14. The mobile terminal of claim 10, wherein the controller (180) controls movements, exchanges and copying of the hologram image between the hologram output units (121) through a user's touches or communications and approaches between devices, and controls a viewing angle of the hologram image through a privacy protection setting.

15. The mobile terminal of claim 10, wherein the controller (180) automatically controls a display size of the hologram image according to a user's distance, and controls a specific part of the hologram image to be moved, enlarged and contracted by a user's touch.
